# FASCICULE DE BREVET EUROPEEN

(11) **EP 2 545 198 B1**
(45) Date de publication et mention de la délivrance du brevet: **01.01.2014**
(21) Numéro de dépôt: 11712996.5
(22) Date de dépôt: 11.03.2011
(51) Int. Cl.: F01D 5/28, C23C 18/12

(54) **METHODE DE FABRICATION D'UNE PROTECTON DE BARRIERE THERMIQUE ET REVETEMENT MULTICOUCHE APTE A FORMER UNE BARRIERE THERMIQUE.**
VERFAHREN ZUR HERSTELLUNG EINES WÄRMEDÄMMSCHUTZES UND ALS WÄRMEDÄMMUNG GEEINGNETE MEHRFACHBESCHICHTUNG
METHOD FOR MANUFACTURING A THERMAL BARRIER PROTECTION AND MULTILAYERCOATING SUITABLE AS THERMAL BARRIER

(30) Priorité: 12.03.2010 FR 1000992
(43) Date de publication de la demande: 16.01.2013
(73) Titulaire: SNECMA, 75015 Paris (FR); Centre National de la Recherche Scientifique, 75016 Paris (FR); Université Paul Sabatier Toulouse III, 31062 Toulouse Cedex 9 (FR)
(72) Inventeur: MENUEY, Justine, F-86100 Chatellerault (FR); ANSART, Florence, F-31670 Labege (FR); BONINO, Jean-Pierre, F-31320 Pechabou (FR); FENECH, Justine, F-31100 Toulouse (FR); VIAZZI, Céline, F-84300 Cavaillon (FR)
(74) Mandataire: Cardy, Sophie Marie
(86) Numéro de dépôt international: PCT/FR2011/050500
(87) Numéro de publication internationale: WO 2011/110794

(56) Documents cités:
- EP-A1- 1 788 122
- US-B1- 6 756 082
- TROCZYNSKI T ET AL: "POST-DEPOSITION TREATMENT OF ZIRCONIA THERMAL BARRIER COATINGS USING SOL-GEL ALUMINA", JOURNAL OF THERMAL SPRAY TECHNOLOGY, ASM INTERNATIONAL, MATERIALS PARK, US LNKD- DOI:10.1361/105996399770350458, vol. 8, no. 2, 1 janvier 1999 (1999-01-01) , pages 229-234, XP009077536, ISSN: 1059-9630
- VIAZZI C ET AL: "Synthesis by sol-gel route and characterization of Yttria Stabilized Zirconia coatings for thermal barrier applications", SURFACE AND COATINGS TECHNOLOGY, ELSEVIER, AMSTERDAM, NL LNKD- DOI:10.1016/J.SURFCOAT.2006.07.241, vol. 201, no. 7, 20 décembre 2006 (2006-12-20), pages 3889-3893, XP024995908, ISSN: 0257-8972 [extrait le 2006-12-20]

## Description

L'invention concerne une méthode de fabrication d'une protection d'une barrière thermique recouvrant un substrat métallique en superalliage, un revêtement multicouche apte à former une barrière thermique sur un substrat métallique en superalliage ainsi que la pièce thermomécanique résultant de cette méthode de fabrication et/ou comportant un tel revêtement.

La recherche de l'augmentation du rendement des turbomachines, en particulier dans le domaine aéronautique, et de la diminution de la consommation en carburant et des émissions polluantes de gaz et d'imbrûlés ont conduit à se rapprocher de la stoechiométrie de combustion du carburant. Cette situation s'accompagne d'une augmentation de la température des gaz sortant de la chambre de combustion en direction de la turbine.

Aujourd'hui, la température limite d'utilisation des superalliages est de l'ordre de 1100°C, la température des gaz en sortie de chambre de combustion ou en entrée de turbine pouvant atteindre 1600°C.

En conséquence, il a fallu adapter les matériaux de la turbine à cette élévation de température, en perfectionnant les techniques de refroidissement des aubes de turbines (aubes creuses) et/ou en améliorant les propriétés de résistance aux températures élevées de ces matériaux. Cette deuxième voie, en combinaison avec l'utilisation des superalliages à base de nickel et/ou de cobalt, a conduit à plusieurs solutions parmi lesquelles le dépôt d'un revêtement isolant thermique dénommé barrière thermique composé de plusieurs couches, sur le substrat en superalliage.

L'utilisation des barrières thermiques dans les moteurs aéronautiques s'est généralisée depuis une vingtaine d'années et permet d'augmenter la température d'entrée des gaz dans les turbines, de réduire le flux d'air de refroidissement et ainsi d'améliorer le rendement des moteurs.

En effet, ce revêtement isolant permet de créer sur une pièce refroidie, en régime permanent de fonctionnement, un gradient thermique au travers du revêtement, dont l'amplitude totale peut dépasser 100°C pour un revêtement de 150 à 200 µm d'épaisseur environ présentant une conductivité de 1.1 W.m⁻¹.K⁻¹. La température de fonctionnement du métal sous-jacent formant le substrat pour le revêtement se trouve diminuée du même gradient, ce qui induit des gains important sur le volume d'air de refroidissement nécessaire, la durée de vie de la pièce et la consommation spécifique du moteur à turbine.

Il est connu de recourir à l'utilisation d'une barrière thermique comprenant une couche de céramique à base de zircone stabilisée à l'oxyde d'yttrium, à savoir une zircone yttriée comprenant une teneur molaire d'oxyde d'yttrium entre 4 et 12%, qui présente un coefficient de dilatation différent du superalliage constituant le substrat et une conductivité thermique assez faible. La zircone stabilisée peut également contenir dans certains cas au moins un oxyde d'un élément choisi dans le groupe constitué de terres rares, de préférence dans le sous-groupe : Y (yttrium), Dy (dysprosium), Er (erbium), Eu (europium), Gd (gadolinium), Sm (samarium), Yb (ytterbium), ou une combinaison d'un oxyde de tantale (Ta) et d'au moins un oxyde de terre rare, ou avec une combinaison d'un oxyde de niobium (Nb) et d'au moins un oxyde de terre rare.

Parmi les revêtements utilisés, on citera l'utilisation assez générale d'une couche de céramique à base de zircone partiellement stabilisée à l'oxyde d'yttrium, par exemple Zr₀.₉₂ Y_{0,08}O_{1,96}.

Afin d'assurer l'ancrage de cette couche de céramique, une sous-couche métallique, avec un coefficient de dilation proche du substrat, est généralement interposée entre le substrat de la pièce et la couche de céramique. Cette sous-couche assure l'adhérence entre le substrat de la pièce et la couche de céramique, sachant que l'adhérence entre la sous-couche et le substrat de la pièce se fait par inter-diffusion, et que l'adhérence entre la sous-couche et la couche de céramique se fait par ancrage mécanique et par la propension de la sous-couche à développer à haute température, à l'interface céramique/sous-couche, une couche d'oxyde mince qui assure le contact chimique avec la céramique. En outre, cette sous-couche métallique assure la protection de la pièce contre les phénomènes de corrosion.

En particulier, il est connu d'utiliser une sous-couche formée d'un alliage de type MCrAlY, M étant un métal choisi parmi le nickel, le cobalt, le fer ou un mélange de ces métaux, qui consiste en une matrice gamma de nickel cobalt avec, en solution, du chrome contenant des précipités β NiAl.

Il est également connu d'utiliser une sous-couche constituée d'un aluminiure de nickel comprenant un métal choisi parmi le platine, le chrome, le palladium, le ruthénium, l'iridium, l'osmium, le rhodium, ou un mélange de ces métaux et/ou un élément réactif choisi parmi le zirconium (Zr), le cerium (Ce), le lanthane (La), le titane (Ti), le tantale (Ta), l'hafnium (Hf), le silicium (Si) et l'yttrium (Y), ou une sous-couche métallique de type MCrAlYPt, M étant un métal choisi parmi le nickel, le cobalt, le fer ou un mélange de ces métaux, ou à base de Pt.

Cette sous-couche peut correspondre enfin à un revêtement de platine diffusé seul qui consiste en une matrice gamma-gamma prime de nickel cobalt avec du Pt en solution.

Habituellement, la couche de céramique est déposée sur la pièce à revêtir soit par une technique de projection (en particulier projection plasma) ou de dépôt par voie physique en phase vapeur, c'est-à-dire par évaporation (par exemple par EB-PVD ou « Electron Beam Physical Vapour Deposition » formant un revêtement déposé dans une enceinte d'évaporation sous vide sous bombardement électronique).

Dans le cas d'un revêtement projeté, un dépôt d'oxyde à base de zircone est effectué par des techniques du type projection plasma sous atmosphère contrôlée, ce qui conduit à la formation d'un revêtement constitué d'un empilement de gouttelettes fondues puis trempées par choc, aplaties et empilées de façon à former un dépôt densifié de manière imparfaite d'une épaisseur généralement comprise entre 50 micromètres et 1 millimètre.

Un revêtement déposé par voie physique, et par exemple par évaporation sous bombardement électronique, engendre un revêtement constitué d'un assemblage de colonnettes dirigées sensiblement de manière perpendiculaire à la surface à revêtir, sur une épaisseur comprise entre 20 et 600 micromètres. Avantageusement, l'espace entre les colonnettes permet au revêtement de compenser efficacement les sollicitations thermomécaniques dues, aux températures de service, au différentiel de dilatation avec le substrat en superalliage.

Ainsi, on obtient des pièces avec des durées de vie élevées en fatigue thermique à haute température.

Classiquement, ces barrières thermiques créent donc une discontinuité de conductivité thermique entre le revêtement extérieur de la pièce mécanique, formant cette barrière thermique, et le substrat de ce revêtement formant le matériau constitutif de la pièce.

En service, l'ingestion de sable dans le moteur conduit à des phénomènes d'érosion de la surface de la céramique et au dépôt de débris, d'impuretés et de sels fondus. Par « sels fondus », on entend des compositions d'oxydes contenant des oxydes de calcium, de magnésium, d'aluminium, de silicium, des mélanges des ces oxydes, et/ou tout autre débris en provenance de la partie amont du moteur. Ces systèmes, principalement composés d'oxydes de calcium, de magnésium, d'aluminium et de silicium en mélange (Ca-Mg-Al-SiO) sont appelés « CMAS ».

En particulier, les espaces de la structure colonnaire de la céramique peuvent être le lieu d'infiltration de ces dépôts de sels fondus pour des températures supérieures à 1100°C. Après infiltration de ces CMAS en fusion dans la structure de surface poreuse du revêtement de barrière thermique, ces sels fondus se refroidissent et se solidifient à l'intérieur de la structure poreuse, notamment entre les colonnes. Les CMAS solidifiés engendrent une accumulation de contraintes, ce qui conduit à une fissuration et à un écaillage prématuré, total ou partiel, de la barrière thermique.

En effet, ces CMAS forment des eutectiques à haute température et devenant quasi-liquide, ils s'infiltrent dans les porosités et les interstices de la couche de céramique, en allant parfois jusqu'à l'interface entre la céramique et la sous-couche métallique.

Il faut noter que dans cet état, les CMAS réagissent avec la zircone partiellement stabilisée à l'yttrine (oxyde d'yttrium), ce qui engendre une fragilisation de la céramique qui perd alors son intégrité.

La dégradation de la barrière thermique intervient soit par la dissolution de cette couche de céramique du fait de l'attaque préférentielle des éléments constituant la céramique soit par l'abaissement de la tolérance à la déformation de la céramique dont la structure colonnaire ne peut plus jouer son rôle d'absorption des contraintes une fois que les CMAS se sont infiltrés le long des colonnes de la céramique. Ces dégradations se forment notamment par écaillage de la couche de céramique.

En conséquence, le substrat n'étant plus (localement) protégé par la couche de céramique isolante, il est soumis à de plus forte températures et s'endommage alors très rapidement. Ainsi, les pièces concernées (en particulier les parois de la chambre de combustion, les aubes, viroles ou anneaux et distributeurs de la turbine haute pression) subissent un endommagement prématuré.

De nombreuses tentatives de l'art antérieur pour éviter ou retarder l'apparition des effets néfastes des CMAS sont basées sur des techniques de dépôt d'une couche supplémentaire formée d'une couche d'émail (couche de matière vitrifiée) à la surface de la barrière thermique, constituant une couche externe hermétique destinée à empêcher l'infiltration des CMAS fondus dans la structure poreuse. Le document EP 1 428 908 présente l'une de ces techniques.

Cependant, ces techniques présentent un certains nombres d'inconvénients parmi lesquels le fait qu'elles requièrent le dépôt d'une couche de matière supplémentaire avec un procédé relativement lourd à mettre en oeuvre.

La présente invention a donc pour objectif de proposer une méthode de fabrication d'une protection de barrière thermique simple à mettre en oeuvre et une structure de barrière thermique résultant de cette méthode qui empêche ou retarde les dégradations causées par les sels fondus sur la structure poreuse de la barrière thermique, ou minimise leur importance.

La présente invention a également pour objectif de proposer un revêtement multicouche apte à former une barrière thermique sur un substrat métallique en superalliage, et dont la structure permette de protéger des dégradations engendrées par ces CMAS.

L'invention a également pour objectif de fournir une pièce thermomécanique en superalliage résultant de cette méthode de traitement qui limite l'endommagement de la céramique résultant des sels fondus lors du fonctionnement de la pièce, en particulier une aube de turbine, à haute température et ce, afin d'augmenter significativement la durée de vie du système de barrière thermique.

A cet effet, selon la présente invention, il est proposé une méthode de fabrication d'une protection de barrière thermique recouvrant un substrat métallique en superalliage, ladite barrière thermique comprenant au moins une sous-couche métallique et une couche de céramique à base de zircone stabilisée à l'yttrium présentant une structure colonnaire définissant des pores. Selon l'invention, cette méthode est caractérisée en ce que l'on met en oeuvre les étapes suivantes :
- on forme sur ladite couche de céramique une couche de protection continue à base d'oxyde, par voie sol-gel, en utilisant un sol comprenant des précurseurs dudit oxyde, et
- on réalise un traitement thermique,
ce par quoi on constitue une couche de protection extérieure contre l'attaque des CMAS de la barrière thermique.

Une telle couche de protection est, dans certains cas, apte à constituer une couche sacrificielle qui retarde les infiltrations de CMAS dans la céramique.

Grâce à cette méthode, il est ainsi possible de traiter les barrières thermiques classiques déjà formées, en créant par-dessus la couche de protection, selon une mise en oeuvre très simple qui s'effectue à température ambiante (procédé sol-gel), et donc en évitant la mise en oeuvre de dépôts à haute température et/ou sous vide de type projection.

De cette manière, on comprend qu'il est possible de former une couche de protection présentant des caractéristiques très variables mais contrôlables, notamment en termes d'épaisseurs, de composition, de taux de porosités.....

Cette solution présente aussi l'avantage supplémentaire, de permettre, en outre, la formation d'une couche de protection poreuse, ce qui permet d'éviter de rigidifier la structure colonnaire de la couche de céramique et de conserver une barrière thermique capable d'accommoder les contraintes thermiques résultant des variations de température en cours de fonctionnement.

Il faut noter que les pores d'une telle couche de protection obtenue par voie sol-gel ne présentant pas de direction privilégiée, cette absence de directionnalité de la texture poreuse de la couche de protection prévient de toute infiltration directe pas les sels fondus.

Selon une disposition complémentaire, avant la formation de la couche de protection, on réalise par voie sol-gel l'imprégnation d'au moins une partie des pores de la couche de céramique par un sol à base de zircone, et ce afin de former une sous-couche d'ancrage à base de zircone pour la couche de protection.

De cette façon, par la présence d'une telle sous-couche d'ancrage qui est en adéquation avec la structure et la composition de la couche de céramique, on facilite l'accrochage de la couche de protection qui est alors déposée ultérieurement.

Selon un premier mode de mise en oeuvre, ladite couche de protection comporte essentiellement de la zircone dopée avec de l'yttrium et/ou avec au moins un élément appartenant au groupe des lanthanides.

De cette façon, avec une couche de protection à base de zircone, on retrouve pour la couche de protection une composition proche de celle de la couche de céramique.

Ceci est tout particulièrement vrai dans le cas où la couche de protection est formée à partir de zircone dopée avec de l'oxyde d'yttrium ou yttrine : il y a alors identité de composition entre la couche de protection et la couche de céramique tandis que la structure différente entre ces couches permet à la couche de protection de constituer une couche sacrificielle au sommet de la barrière thermique, les CMAS ne pouvant pas s'y infiltrer directement mais réagissant avec la couche de protection sans atteindre, pendant un certain temps, la couche de céramique.

C'est également vrai dans le cas où la couche de protection est formée à partir de zircone dopée avec au moins un élément appartenant au groupe des lanthanides (lanthane, cérium, praséodyme, néodyme, prométhium, samarium, europium, gadolinium, terbium, dysprosium, holmium, erbium, thulium, ytterbium et lutétium, ainsi que le niobium).

Ainsi, dans ce premier mode de réalisation, soit la couche de protection à base de zircone comporte de yttrine, et présente alors la même composition que la couche de céramique, soit la couche de protection à base de zircone ne comporte pas d'yttrine afin d'éviter la présence dans la couche de protection d'un composé susceptible d'induire la formation d'eutectiques avec les CMAS.

Selon un deuxième mode de mise en oeuvre, ladite couche de protection ne comporte pas d'oxyde de zircone mais elle comporte essentiellement un ou plusieurs oxydes de terres rares.

Par « terres rares », on entend les éléments appartenant au groupe des lanthanides (lanthane, cérium, praséodyme, néodyme, prométhium, samarium, europium, gadolinium, terbium, dysprosium, holmium, erbium, thulium, ytterbium et lutétium, ainsi que le niobium), le scandium, l'yttrium, le zirconium et l'hafnium.

Selon un mode de mise en oeuvre préférentiel, on réalise la formation de la couche de protection par voie sol-gel en utilisant un sol chargé.

De cette façon, grâce à l'utilisation d'un sol contenant des particules, on peut atteindre des dépôts plus épais pour la couche de protection, allant jusqu'à 100µm.

Dans une variante préférentielle, lorsqu'on utilise un sol chargé pour la formation de la couche de protection, on utilise le même sol mais non chargé pour la formation de la sous-couche d'ancrage, ce qui permet de conserver une grande affinité chimique entre la sous-couche d'ancrage et la couche de protection avec une plus grande viscosité pour le sol destiné à former la sous-couche d'ancrage qui vient ainsi remplir plus aisément et plus en profondeur les pores de la couche de céramique.

Ainsi, dans ce cas, on réalise la formation de la sous-couche d'ancrage avec un sol non chargé et le sol chargé utilisé pour la formation de la couche de protection par voie sol-gel présente un liant formé d'un sol ayant la même composition que ledit sol non chargé et une charge formée de particules de poudre. Avantageusement, ces particules de poudre sont obtenues à partir du même sol non chargé que celui utilisé pour la formation de la sous-couche d'ancrage.

La présente invention porte également sur le revêtement multicouche résultant de la méthode de fabrication précitée, ainsi que sur les pièces en superalliage comportant un tel revêtement.

Le revêtement objet de la présente invention est un revêtement multicouche apte à former une barrière thermique sur un substrat métallique en superalliage, comprenant au moins une sous-couche métallique disposée sur le substrat, une couche de céramique à base de zircone stabilisée à l'yttrium recouvrant ladite sous-couche et présentant une structure colonnaire définissant des pores et une couche de protection à base d'oxyde recouvrant la couche de céramique en formant un film continu.

On constate généralement que ladite couche de protection est en outre infiltrée dans au moins une partie des pores de la couche de céramique.

Selon une disposition supplémentaire, ledit revêtement comporte en outre une sous-couche d'ancrage à base de zircone résultant d'un sol, disposée entre la couche de céramique et la couche de protection et dans au moins une partie des pores de la couche de céramique.

En effet, il a été montré que déposer la couche de protection directement sur la couche de céramique pouvait générer des contraintes importantes lors du traitement thermique, pouvant conduire à une décohésion prématurée du revêtement multicouche.

Dans le cadre de l'invention, la sous-couche d'ancrage a pour rôle d'augmenter l'affinité chimique de la couche de protection vis-à-vis de la couche de céramique. A cet effet, la sous-couche d'ancrage est mince et dense et assure une bonne adhérence avec le substrat : elle permet de développer des liaisons chimiques avec la couche de céramique et d'augmenter la cohésion de l'ensemble du revêtement multicouche. Elle joue le rôle d'interface chimique entre la couche de céramique et la couche de protection.

Selon l'invention, ladite couche de protection présente de préférence une épaisseur comprise entre 1 et 100 µm, de préférence entre 2 et 50 µm et de préférence entre 2 et 10 µm.

Selon l'invention, ladite couche de protection présente une porosité non orientée : en effet, comme exposé précédemment, grâce notamment à la mise en oeuvre par le procédé sol-gel, on empêche toute présence de porosité orientée dans la couche de protection, et ce, afin d'empêcher l'infiltration directe des CMAS.

Avantageusement, ladite couche de protection est plus épaisse que ladite sous-couche d'ancrage (en considérant l'épaisseur de la sous-couche d'ancrage comme ce qui dépasse au-dessus de la couche de céramique). Par exemple, ladite couche de protection est 2 à 50 fois plus épaisse que ladite sous-couche d'ancrage et de préférence 5 à 40, avantageusement de 10 à 20 fois plus épaisse que ladite sous-couche d'ancrage.

A titre d'exemple, la sous-couche d'ancrage présente une épaisseur de l'ordre de 2 à 5 µm et la couche de protection qui la surmonte présente une épaisseur de l'ordre de 40 à 60 µm, soit 10 à 15 fois plus.

Avantageusement, la taille des grains de la couche de protection est plus grande que la taille des grains de la sous-couche d'ancrage : la taille moyenne des grains de la couche de protection est par exemple de 5 à 20, avantageusement de 8 à 10 fois plus grande que la taille moyenne des grains de la sous-couche d'ancrage.

A titre d'exemple, la sous-couche d'ancrage présente une taille de grains de l'ordre de 80 à 100 nm (nanomètres) et la couche de protection qui la surmonte présente une taille de grains de l'ordre de 800 nm (nanomètres) à 2 µm (micromètres).

Avantageusement, la répartition de la taille des grains de la sous-couche d'ancrage est plus homogène que la répartition de la taille des grains de la couche de protection.

Ainsi, on rencontre avantageusement selon l'invention une structure de revêtement dans laquelle la sous-couche d'ancrage présente une microstructure à grains fins et homogènes et la couche de protection, formant une couche active plus épaisse, présente une microstructure à grains de plus grande taille et moins monodisperses.

D'autres avantages et caractéristiques de l'invention ressortiront à la lecture de la description suivante faite à titre d'exemple et en référence aux dessins annexés dans lesquels :
- la figure 1 est une coupe micrographique qui montre les différentes couches de la barrière thermique à la surface d'une pièce mécanique revêtue d'une barrière thermique selon l'art antérieur,
- la figure 2 est un schéma représentant en coupe la structure de la barrière thermique un peu après l'exposition aux infiltrations de sels fondus ou CMAS,
- les figures 3 et 4 sont des coupes micrographiques qui montrent la dégradation de la surface de la barrière thermique, respectivement un peu après et plus tard après l'exposition aux infiltrations de sels fondus ou CMAS, et
- la figure 5 représente le revêtement multicouche selon la présente invention.

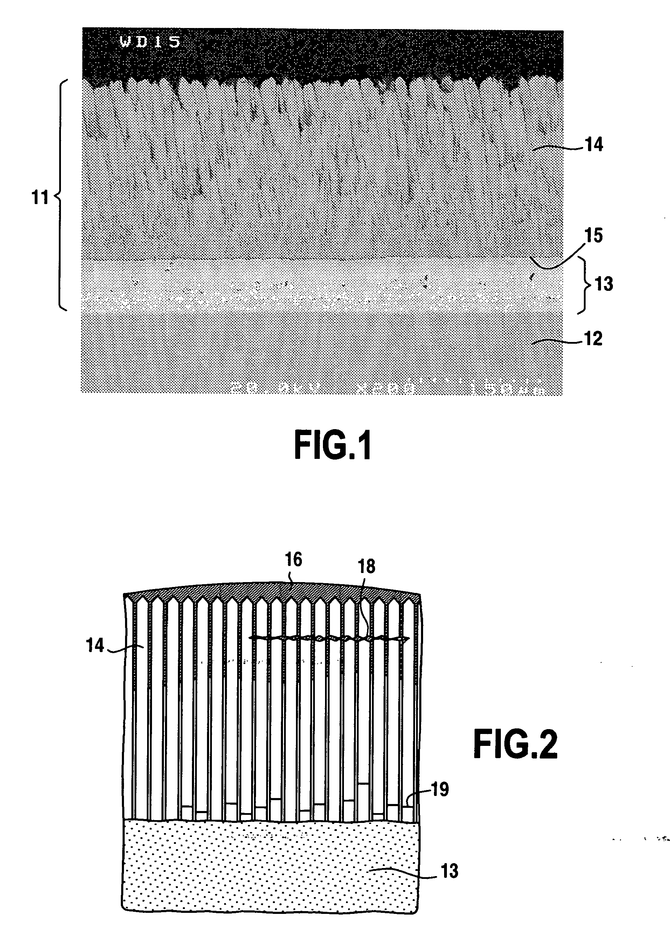

La surface de la pièce thermomécanique représentée partiellement sur la figure 1 comporte un revêtement de barrière thermique 11 déposé sur un substrat 12 en superalliage, tel que les superalliages à base de nickel et/ou de cobalt. Le revêtement de barrière thermique 11 comporte une sous-couche métallique 13 déposée sur le substrat 12, et une couche de céramique 14, déposée sur la sous-couche 13.

La sous-couche de liaison 13 est une sous-couche métallique constituée d'un aluminiure de nickel.

La couche de céramique 14 est constituée de zircone yttriée comprenant une teneur molaire d'oxyde d'yttrium entre 4 et 12% (zircone partiellement stabilisée). La zircone stabilisé 14 peut également contenir dans certains cas au moins un oxyde d'un élément choisi dans le groupe constitué de terres rares, de préférence dans le sous-groupe : Y (yttrium), Dy (dysprosium), Er (erbium), Eu (europium), Gd (gadolinium), Sm (samarium), Yb (ytterbium), ou une combinaison d'un oxyde de tantale (Ta) et d'au moins un oxyde de terre rare, ou avec une combinaison d'un oxyde de niobium (Nb) et d'au moins un oxyde de terre rare

Lors de la fabrication, la sous-couche de liaison 13 a été oxydée préalablement au dépôt de la couche de céramique 14, d'où la présence d'une couche intermédiaire d'alumine 15 entre la sous-couche 13 et la couche de céramique 14.

On retrouve sur la vue de la figure 2 un schéma représentant les différentes couches précitées, avec une structure colonnaire typique de la couche de céramique 14 présente en surface.

Pendant son service, la pièce (par exemple une aube de turbine) subit des centaines de cycles à haute température (de l'ordre de 1100°C°), au cours desquels des sels fondus 16 (CMAS) sont susceptibles de venir à la surface et de s'infiltrer dans les pores et interstices de la structure colonnaire sur une certaine épaisseur de la couche de céramique 14 (voir la figure 2).

Ces sels fondus 16 se solidifient et conduisent à la formation de contraintes qui génèrent, par choc thermique, lors du refroidissement de la pièce, des fissures 18 dans la couche de céramique 14, ce qui conduit à un délaminage, à savoir au départ d'une portion superficielle de la couche de céramique 14.

Les contraintes de dilatation thermique entraînent également le décollement de certaines colonnes de la couche de céramique à proximité de la sous-couche de liaison 13 (voir les emplacements 19 de la figure 2).

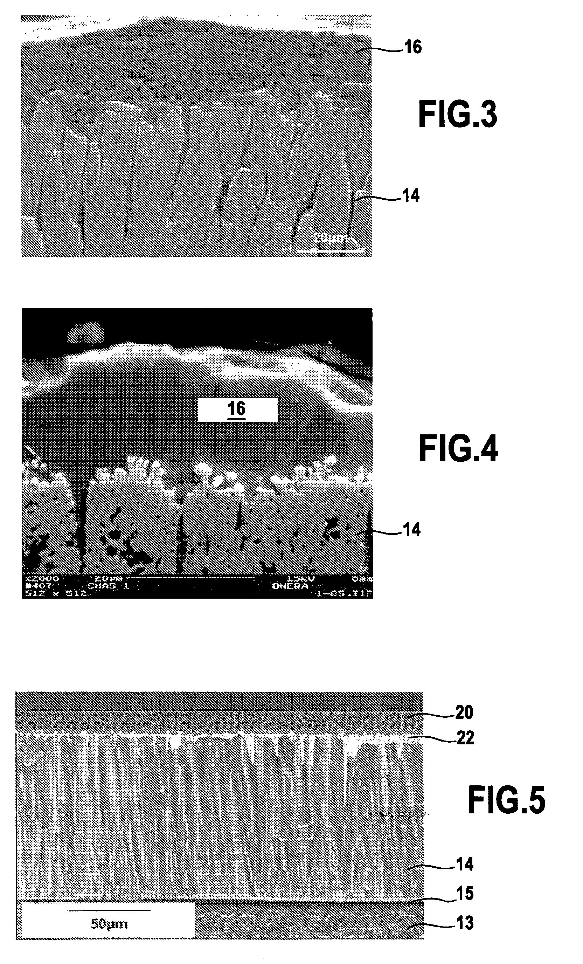

Si l'on se reporte respectivement aux figures 3 et 4, on constate que le dépôt de CMAS, sous la forme des sels fondus 16 qui recouvrent la couche de céramique 14 en pénétrant entre les colonnes de cette dernière (figure 3), entraîne des dégradations de la barrière thermique notamment par la réaction entre ces sels fondus 16 et l'yttrine contenue dans la couche de céramique 14 qui tend alors à se dissoudre (voir la désagrégation de la couche de céramique 14 sur la figure 4).

Dans le cadre de la présente invention, le demandeur a cherché à protéger la microstructure de la couche de céramique 14 dans sa partie supérieure afin de retarder, limiter, voire stopper l'infiltration de sels fondus à haute température dans la couche de céramique 14 et augmenter ainsi la durée de vie de la pièce revêtue de la barrière thermique.

La solution a été trouvée par l'utilisation d'une couche de protection 20 (voir figure 5) qui recouvre toute la surface de la couche de céramique 14, afin de protéger cette dernière de l'attaque pas les CMAS.

Comme il a déjà été précisé précédemment, et comme il apparaît sur la figure 5, il est prévu d'interposer entre la couche de protection 20 et la couche de céramique 14, une couche d'ancrage 22.

La couche de protection 20 et la couche d'ancrage 22 sont déposées sur la couche de céramique par la voie sol-gel.

Ce dépôt s'effectuant par voie liquide, il permet la pénétration du sol dans les pores, et notamment entre les colonnes, de la couche de céramique 14 (il s'agit de la couche d'ancrage 22 et, dans certains cas, de la couche d'ancrage 22 et de la couche de protection 20).

On rappelle que la voie sol-gel est un procédé de synthèse de « chimie douce » utilisée pour l'élaboration, à basse température (notamment à température ambiante), de poudres et de couches céramiques de type oxyde. Ce procédé utilise un mélange de précurseurs ioniques (sel métallique) et/ou moléculaire (alcoxydes métalliques). Dans cette phase liquide, appelée sol, les réactions chimiques d'hydrolyse et de condensation contribuent à la formation d'un réseau inorganique tridimensionnel (gel) à viscosité infinie dans lequel le solvant demeure.

Pour évacuer ce solvant, il existe deux modes de séchage possibles. D'une part, le séchage conventionnel qui permet par un étuvage à basse température et à pression atmosphérique, de sécher le gel précurseur de zircone pour former un xérogel dans lequel le réseau tridimensionnel du gel disparaît. D'autre part, il est possible de réaliser un séchage dans des conditions supercritiques, ce qui permet, après évaporation du solvant, de conserver le réseau tridimensionnel du gel. Dans ce cas, il se forme un aérogel qui, à l'issue d'une étape de calcination ultérieure, conduit, comme dans le cas d'un xérogel, à la formation de particules de poudre. De telles particules peuvent servir de charges dans la formation d'un sol chargé. On note que dans le cas d'un aérogel, les particules sont beaucoup plus fines (taille inférieure à 500 nm), monodisperses et de surface spécifique plus élevée.

Outre l'abaissement des températures de synthèse, par rapport aux procédés classiques de projection (notamment EPBVD), la voie sol gel permet en outre d'obtenir pour la couche de protection 20, des oxydes de zirconium de grande pureté mais également des oxydes de zirconium dopés avec des éléments comme l'yttrium ou d'autres terres rares.

La voie sol gel est donc un procédé de synthèse de matériaux céramiques de type oxyde, mais également un procédé de mise en forme, puisque plusieurs techniques peuvent être associées pour effectuer des dépôts de sol en vue de l'élaboration de couches céramiques.

Le procédé de dépôt le plus utilisé pour l'élaboration d'une couche d'oxyde de type céramique par voie sol gel est le trempage (ou *«Dip Coating* »). Il consiste à immerger le substrat à revêtir, en l'espèce la pièce revêtue de la barrière thermique 11, dans un sol, puis à le retirer une vitesse contrôlée pur qu'un film d'épaisseur voulue puisse recouvrir de manière homogène la surface avec une bonne adhérence. Il existe d'autres techniques de dépôt telles que notamment la centrifugation (ou *«Spin-Coating* ») ou la pulvérisation (ou «*Spray-Coating*»).

En général, les dépôts obtenus à partir d'un sol présentent des épaisseurs atteignant au maximum 2 à 3 µm. Pour réaliser un dépôt plus épais (en général jusqu'à 100 µm) le milieu de dépôt utilisé est un sol contenant des particules, dit sol chargé. Dans ce dernier cas, ce milieu de dépôt se compose des précurseurs moléculaires du sol, auxquels sont ajoutés en suspension des particules de compositions chimiques et structurales identiques à celles de l'oxyde recherché et dont la taille, la morphologie et les caractéristiques physico-chimiques conduisent à une suspension stable. Ces particules peuvent être issues de la voie sol gel, mais également de tout autre procédé conduisant à l'élaboration de particules nanométriques et monodisperses.

Les couches de protection 20 (et éventuellement les couches d'ancrage 22) obtenues par trempage à partir d'un sol chargé sont donc composites et sont constituées, après séchage, d'une phase xérogel (issue du sol) dans laquelle sont dispersées des particules initialement présentes dans la suspension de dépôt.

Pour finaliser la formation de la couche de protection 20 en céramique et de la couche d'ancrage 22, celles-ci subissent par la suite un traitement thermique à l'air au cours duquel vont successivement intervenir l'évaporation des solvants (100 °C) puis la calcination des composés organiques (300 à 450 °C), conduisant ainsi à la formation d'un oxyde amorphe.

D'autres types de traitements thermiques sont possibles en modifiant l'atmosphère, la vitesse de montée en température ainsi que les valeurs de température de la rampe et du palier, et ce pour obtenir la phase d'oxyde recherché avec les paramètres structuraux prédéfinis.

À l'issue de ces différentes étapes, les couches de protection 20 et les couches d'ancrage 22 obtenues, d'épaisseur comprise entre 1 et 100 µm, possèdent dans tous les cas une porosité non orientée qui dépend essentiellement des caractéristiques du sol de départ (composition, taille et morphologie des particules rentrant dans la composition du sol lorsqu'il est chargé, viscosité du sol, présence de plastifiant et/ou d'agents porogènes, etc...).

Ainsi, on comprend que le procédé sol gel présente un intérêt pour réaliser la protection des barrières thermiques à texture colonnaire, telle que celles issues du procédé de projection EPBVD.

En effet, la voie sol gel associée à un post traitement thermique permet d'élaborer des matériaux céramiques de type oxyde présentant des compositions et des caractéristiques structurales identiques à celles obtenues par des techniques conventionnelles.

Il est donc possible de déposer les couches de protection 20 formées de zircone stabilisée à l'yttrium (composition identique mais structure différente de celles de la couche de céramique 14).

Cette technique est également adaptée à la synthèse de solution solide de substitution avec des terres rares (couche de protection (20) composée essentiellement d'un ou plusieurs oxydes de terres rares).

De cette façon, on obtient une couche de protection 20 et une couche d'ancrage 22 qui présentent une texture poreuse non directionnelle dans laquelle le taux de porosité est contrôlé.

Par ailleurs, ce procédé de dépôt par voie liquide est d'une part adaptée à l'imprégnation de matériau poreux (ici la couche de céramique 14) par le jeu des caractéristiques physico-chimiques du milieu de dépôt (sol non chargé ou sol chargé) et d'autre part permet de recouvrir des surfaces présentant une forte rugosité (de l'ordre de Ra=15 microns) avec un effet nivelant très important.

Le procédé sol gel apparaît donc comme solution très adaptée pour lutter contre la dégradation des barrières thermiques 11 par les sels fondus de CMAS.

Ce procédé permet par ailleurs d'adapter les caractéristiques des couches de protection 20 et des couches d'ancrage 22, à savoir leur composition, leur structure cristallographique, leur taux de porosité.....

On peut distinguer deux familles de matériaux pour les couches de protection 20 et la couche d'ancrage 22, qui se distinguent l'une de l'autre par leurs modes d'action.

En premier lieu les couches 20 et 22 peuvent constituer une couche sacrificielle dans le cas où elles sont constituées d'une composition identique à celle de la couche de céramique 14, en l'occurence de la zircone dopée à l'oxyde d'yttrium. Dans ce cas, les caractéristiques du sol chargé (notamment le taux, la taille et la morphologie des particules) permettent de contrôler la densité de pores de la couche en résultant. La présence de porosité non directionnelle constitue un frein à la diffusion de l'eutectique formé avec les CMAS. De cette façon il aura une dégradation préférentielle de cette couche de protection superficielle 20 issue de la voie sol gel, ce qui permet une protection, au moins temporaire de la barrière thermique 11 fonctionnelle sous-jacente.

En second lieu, et notamment pour accroître l'efficacité de la couche de protection 20, celle-ci peut être élaborée à partir de sols et de sols chargés ne contenant pas de composés susceptibles d'induire la formation d'eutectique avec les CMAS, comme c'est le cas avec l'yttrine. Dans ce cas, les sols et les sols chargés mis en oeuvre sont constitués de précurseurs de zircone dopée avec des oxydes appartenant à la famille des lanthanides ou d'autres précurseurs d'oxydes, notamment d'oxyde(s) de terres rares. Là encore, la teneur des composants du sol, de même que les conditions de traitement thermique peuvent être adaptées en fonction de la phase cristalline recherchée pour la couche de protection 20 (et la couche d'ancrage 22) en résultant.

On peut noter que l'utilisation de particules de poudre fine issue de la calcination d'aérogels de zircone comme charge d'un sol chargé est un moyen efficace pour obtenir, à partir d'un sol chargé, des revêtements de zircone formant une couche de protection recouvrant parfaitement la surface de la couche de céramique 14 préalablement revêtue de la sous-couche d'ancrage, tout en étant susceptibles d'en infiltrer la porosité résiduelle éventuelle.

## Revendications

1. Méthode de fabrication d'une protection de barrière thermique (11) recouvrant un substrat métallique en superalliage, ladite barrière thermique (11) comprenant au moins une sous-couche métallique (13) et une couche de céramique (14) à base de zircone stabilisée à l'yttrium présentant une structure colonnaire définissant des pores, **caractérisée en ce que** l'on met en oeuvre les étapes suivantes :
- on réalise par voie sol-gel l'imprégnation d'au moins une partie des pores de la couche de céramique (14) par un sol à base de zircone, et ce afin de former une sous-couche d'ancrage (22) pour une couche de protection,
- on forme, sur ladite couche de céramique (14) surmontée de ladite sous-couche d'ancrage (22), une couche de protection (20) continue à base d'oxyde, par voie sol-gel, en utilisant un sol comprenant des précurseurs dudit oxyde, et
- on réalise un traitement thermique,
ce par quoi on constitue une couche de protection extérieure contre l'attaque des CMAS de la barrière thermique.

2. Méthode selon la revendication 1, **caractérisée en ce que** ladite couche de protection (20) comporte essentiellement de la zircone dopée avec de l'yttrium et/ou avec au moins un élément appartenant au groupe des lanthanides.

3. Méthode selon la revendication 1, **caractérisée en ce que** ladite couche de protection (20) comporte essentiellement un ou plusieurs oxydes de terres rares.

4. Méthode selon l'une quelconque des revendications précédentes, **caractérisée en ce que** l'on réalise la formation de la couche de protection (20) par voie sol-gel en utilisant un sol chargé.

5. Méthode selon la revendication 4, **caractérisée en ce que** l'on réalise la formation de la sous-couche d'ancrage (22) avec un sol non chargé et **en ce que** le sol chargé utilisé pour la formation de la couche de protection (20) par voie sol-gel comporte un liant formé d'un sol ayant la même composition que ledit sol non chargé et une charge formée de particules.

6. Méthode selon la revendication 5, **caractérisée en ce que** ces particules de poudre sont obtenues à partir du même sol non chargé que celui utilisé pour la formation de la sous-couche d'ancrage (22).

7. Revêtement multicouche apte à former une barrière thermique sur un substrat métallique en superalliage, comprenant au moins une sous-couche (13) métallique disposée sur le substrat, une couche de céramique (14) à base de zircone stabilisée à l'yttrium recouvrant ladite sous-couche métallique (13) et présentant une structure colonnaire définissant des pores, une couche de protection (20) à base d'oxyde recouvrant la couche de céramique en formant un film continu et une sous-couche d'ancrage (22) à base de zircone résultant d'un sol, disposée entre la couche de céramique (14) et la couche de protection (20) et dans au moins une partie des pores de la couche de céramique (14).

8. Revêtement selon la revendication 7, **caractérisé en ce que** ladite couche de protection (20) est en outre infiltrée dans au moins une partie des pores de la couche de céramique (14).

9. Revêtement selon l'une quelconque des revendications 7 et 8, **caractérisé en ce que** ladite couche de protection (20) présente une épaisseur comprise entre 1 et 100µm.

10. Revêtement selon l'une quelconque des revendications 7 à 9, **caractérisé en ce que** ladite couche de protection (20) présente une porosité non orientée.

11. Revêtement selon l'une quelconque des revendications 7 à 10, **caractérisé en ce que** ladite couche de protection (20) comporte essentiellement de la zircone dopée avec de l'yttrium et/ou avec au moins un élément appartenant au groupe des lanthanides.

12. Revêtement selon l'une quelconque des revendications 7 à 10, **caractérisé en ce que** ladite couche de protection (20) comporte essentiellement un ou plusieurs oxydes de terres rares.

13. Revêtement selon l'une quelconque des revendications 7 à 12, **caractérisé en ce que** ladite couche de protection (20) est plus épaisse que ladite sous-couche d'ancrage (22).

14. Revêtement selon l'une quelconque des revendications 7 à 13, **caractérisé en ce que** la taille des grains de la couche de protection (20) est plus grande que la taille des grains de la sous-couche d'ancrage (22).

15. Revêtement selon la revendication 14, **caractérisée en ce que** la répartition de la taille des grains de la sous-couche d'ancrage (22) est plus homogène que la répartition de la taille des grains de la couche de protection (20).

## Patentansprüche

1. Verfahren zur Herstellung eines Schutzes einer Wärmebarriere (11), die ein Metallsubstrat aus Superlegierung bedeckt, wobei die Wärmebarriere (11) wenigstens eine metallische Unterschicht (13) und eine Keramikschicht (14) auf der Basis von Yttrium-stabilisiertem Zirkonoxid, die eine Poren definierende Säulenstruktur aufweist, umfasst, **dadurch gekennzeichnet, dass** die folgenden Schritte durchgeführt werden:
- auf dem Sol-Gel-Weg wird die Imprägnierung wenigstens eines Teils der Poren der Keramikschicht (14) mit einem Sol auf Zirkonoxidbasis vollzogen, und dies zur Bildung einer Verankerungsunterschicht (22) für eine Schutzschicht,
- auf der Keramikschicht (14), auf der die Verankerungsunterschicht (22) angeordnet ist, wird eine durchgehende Schutzschicht (20) auf Oxidbasis auf dem Sol-Gel-Weg unter Verwendung eines Sols, das Vorläufer des Oxids umfasst, ausgebildet, und
- es wird eine Wärmebehandlung durchgeführt,
wodurch eine äußere Schutzschicht gegen den Angriff der CMAS der Wärmebarriere gebildet wird.

2. Verfahren nach Anspruch 1, **dadurch gekennzeichnet, dass** die Schutzschicht (20) im Wesentlichen Zirkonoxid, das mit Yttrium und/oder mit wenigstens einem Element, welches zur Gruppe der Lanthanoide gehört, dotiert ist, umfasst.

3. Verfahren nach Anspruch 1, **dadurch gekennzeichnet, dass** die Schutzschicht (20) im Wesentlichen ein oder mehrere Seltenerdoxide umfasst.

4. Verfahren nach einem der vorhergehenden Ansprüche, **dadurch gekennzeichnet, dass** die Bildung der Schutzschicht (20) auf dem Sol-Gel-Weg unter Verwendung eines beladenen Sols vollzogen wird.

5. Verfahren nach Anspruch 4, **dadurch gekennzeichnet, dass** die Bildung der Verankerungsunterschicht (22) mit einem nicht beladenen Sol vollzogen wird und dass das für die Bildung der Schutzschicht (20) auf dem Sol-Gel-Weg verwendete beladene Sol ein Bindemittel, welches von einem Sol mit der gleichen Zusammensetzung wie das nicht beladene Sol gebildet ist, und einen von Partikeln gebildeten Füllstoff umfasst.

6. Verfahren nach Anspruch 5, **dadurch gekennzeichnet, dass** diese Pulverpartikel aus dem gleichen nicht beladenen Sol wie das, welches für die Bildung der Verankerungsunterschicht (22) verwendet wird, erhalten werden.

7. Mehrlagenbeschichtung, die geeignet ist, eine Wärmebarriere auf einem Metallsubstrat aus Superlegierung zu bilden, umfassend wenigstens eine auf dem Substrat angeordnete metallische Unterschicht (13), eine Keramikschicht (14) auf der Basis von Yttrium-stabilisiertem Zirkonoxid, die die metallische Unterschicht (13) bedeckt und eine Poren definierende Säulenstruktur aufweist, eine Schutzschicht (20) auf Oxidbasis, welche unter Ausbildung eines durchgehenden Films die Keramikschicht bedeckt, und eine aus einem Sol hervorgehende Verankerungsunterschicht (22) auf Zirkonoxidbasis, die zwischen der Keramikschicht (14) und der Schutzschicht (20) und in wenigstens einem Teil der Poren der Keramikschicht (14) angeordnet ist.

8. Beschichtung nach Anspruch 7, **dadurch gekennzeichnet, dass** die Schutzschicht (20) ferner in wenigstens einen Teil der Poren der Keramikschicht (14) eingedrungen ist.

9. Beschichtung nach einem der Ansprüche 7 und 8, **dadurch gekennzeichnet, dass** die Schutzschicht (20) eine Dicke zwischen 1 und 100 µm aufweist.

10. Beschichtung nach einem der Ansprüche 7 bis 9, **dadurch gekennzeichnet, dass** die Schutzschicht (20) eine ungerichtete Porosität aufweist.

11. Beschichtung nach einem der Ansprüche 7 bis 10, **dadurch gekennzeichnet, dass** die Schutzschicht (20) im Wesentlichen Zirkonoxid, das mit Yttrium und/oder mit wenigstens einem Element, welches zur Gruppe der Lanthanoide gehört, dotiert ist, umfasst.

12. Beschichtung nach einem der Ansprüche 7 bis 10, **dadurch gekennzeichnet, dass** die Schutzschicht (20) im Wesentlichen ein oder mehrere Seltenerdoxide umfasst.

13. Beschichtung nach einem der Ansprüche 7 bis 12, **dadurch gekennzeichnet, dass** die Schutzschicht (20) dicker als die Verankerungsunterschicht (22) ist.

14. Beschichtung nach einem der Ansprüche 7 bis 13, **dadurch gekennzeichnet, dass** die Korngröße der Schutzschicht (20) größer als die Korngröße der Verankerungsunterschicht (22) ist.

15. Beschichtung nach Anspruch 14, **dadurch gekennzeichnet, dass** die Korngrößenverteilung der Verankerungsunterschicht (22) homogener als die Korngrößenverteilung der Schutzschicht (20) ist.

## Claims

1. A method for manufacturing a thermal barrier protection (11) covering a superalloy metal substrate, said thermal barrier (11) comprising at least one metal sublayer (13) and a ceramic layer (14) based on zirconia stabilized with yttrium having a column structure defining pores, **characterized in that** the following steps are applied:
- impregnation of at least one portion of the pores of the ceramic layer (14) with a sol based on zirconia is achieved via a sol-gel route, and this in order to form an anchoring sublayer (22) for a protective layer,
- on said ceramic layer (14) topped with said anchoring sub-layer (22), a continuous protective layer (20) based on oxide is formed via a sol-gel route, by using a sol comprising precursors of said oxide, and
- a heat treatment is carried out,
whereby an outer protection layer is formed against attack of the thermal barrier by CMASes.

2. The method according to claim 1, **characterized in that** said protective layer (20) essentially includes zirconia doped with yttrium and/or with at least one element belonging to the group of lanthanides.

3. The method according to claim 1, **characterized in that** said protective layer (20) essentially includes one or more rare earth oxides.

4. The method according to any of the preceding claims, **characterized in that** the formation of the protective layer (20) via a sol-gel route is achieved by using a filler-loaded sol.

5. The method according to claim 4, **characterized in that** the formation of the anchoring sublayer (22) is achieved with a non-filler-loaded sol and **in that** the filler-loaded sol used for forming the protective layer (20) via a sol-gel route includes a binder formed with a sol having the same composition as said non-filler-loaded sol and a filler formed with particles.

6. The method according to claim 5, **characterized in that** these powder particles are obtained from the same non--filler-loaded sol as the one used for the formation of the anchoring sublayer (22).

7. A multilayer coating suitable for forming a thermal barrier on a superalloy metal substrate, comprising at least one metal sublayer (13) positioned on the substrate, a ceramic layer (14) based on zirconia stabilized with yttrium covering said metal sub-layer (13) and having a column structure defining pores, a protective layer (20) based on an oxide covering the ceramic layer while forming a continuous film and an anchoring sub-layer (22) based on zirconia resulting from a sol, positioned between the ceramic layer (14) and the protective layer (20) and in at least one portion of the pores of the ceramic layer (14).

8. The coating according to claim 7, **characterized in that** said protective layer (20) is further infiltrated into at least one portion of the pores of the ceramic layer (14).

9. The coating according to any of claims 7 to 8, **characterized in that** said protective layer (20) has a thickness comprised between 1 and 100 µm.

10. The coating according to any of claims 7 to 9, **characterized in that** said protective layer (20) has non-oriented porosity.

11. The coating according to any of claims 7 to 10, **characterized in that** said protective layer (20) essentially includes zirconia doped with yttrium and/or with at least one element belonging to the group of lanthanides.

12. The coating according to any of claims 7 to 10, **characterized in that** said protective layer (20) essentially includes one or more rare earth oxides.

13. The coating according to any of claims 7 to 12, **characterized in that** said protective layer (20) is thicker than said anchoring sublayer (22).

14. The coating according to any of claims 7 to 13, **characterized in that** the size of the grains of the protective layer (20) is larger than the size of the grains of the anchoring sublayer (22).

15. The coating according to claim 14, **characterized in that** the distribution of the size of the grains of the anchoring sublayer (22) is more homogeneous than the distribution of the size of the grains of the protection layer (20).
